# EUROPEAN PATENT APPLICATION

(11) **EP 2 902 650 A1**
(43) Date of publication of application: **05.08.2015**
(21) Application number: 13841995.7
(22) Date of filing: 04.09.2013
(51) Int. Cl.: F16D 25/12, F16D 23/12, F16H 61/18

(54) **CLUTCH CONTROL DEVICE FOR AUTOMATIC TRANSMISSION**

(30) Priority: 26.09.2012 JP 2012212215
(71) Applicant: Jatco Ltd, Fuji-shi, Shizuoka 417-8585 (JP)
(72) Inventor: NAKANO, Yusuke, Fuji-shi Shizuoka 417-8585 (JP); KOBAYASHI, Katsuya, Fuji-shi Shizuoka 417-8585 (JP); KATSUMATA, Tetsushi, Fuji-shi Shizuoka 417-8585 (JP); MIYAKE, Masao, Fuji-shi Shizuoka 417-8585 (JP)
(74) Representative: Grünecker Patent- und Rechtsanwälte PartG mbB
(86) International application number: PCT/JP2013/073734
(87) International publication number: WO 2014/050462

(57) **Abstract**

Provided is a clutch device capable of reducing energy loss caused by clutch-engaging pressure. The clutch control device for an automatic transmission is equipped with: a manual valve (57) for outputting a clutch-engaging pressure when the drive position is selected; a clutch (16) capable of clutch engagement by moving a clutch piston (21) using the supply of the clutch-engaging pressure; a clutch-release valve (54) capable of outputting the clutch-release hydraulic pressure by bypassing the manual valve (57); and a locking mechanism (32) for making it possible to mechanically lock the clutch-piston (21) position in a state of reduced clutch-engaging pressure when the clutch is engaged using the supply of clutch-engaging pressure, and also releasing the lock using the clutch-releasing pressure from the clutch-release valve (54).

## Description

### Technical Field

The present invention relates to an automatic transmission clutch control apparatus mounted on an automotive vehicle or the like, and is configured to hold application of a clutch without a clutch apply pressure after the clutch has been applied.

### Background Art

Multiplate hydraulic clutches are commonly known. A patent document 1 discloses one example. This clutch includes: friction plates spline-fitted on an inner peripheral surface of a clutch drum; friction plates spline-fitted on an outer peripheral surface of a clutch hub disposed inside of the clutch drum; a clutch piston configured to be hydraulically actuated; and a return spring configured to press the clutch piston back into a clutch release position. Application of the clutch is implemented by supplying a clutch apply pressure oil, and thereby causing the clutch piston to travel in its axial direction against an elastic force of the return spring, and causing the friction plates to be pressed on each other, to establish a clutch apply condition where torque is transmittable between the clutch drum and the clutch hub. Release of the clutch is implemented by draining the clutch apply pressure oil, and thereby causing the clutch piston to be pressed back by the return spring, and releasing the friction plates from the pressing force, to establish a clutch release condition where the torque therebetween is not transmitted.

### Prior Art Document(s)

### Patent Document(s)

Patent Document 1: Japanese Patent Application Publication No. H07-12221

### Summary of the Invention

### Problem(s) to be Solved by the Invention

However, the conventional clutch described above is confronted by the following problem. In the conventional clutch device, while the clutch is being applied, it is necessary to constantly apply the high clutch apply oil pressure to the clutch piston for ensuring that the friction plates are provided with a pressing force required to resist the return force of the return spring. This necessarily burdens an oil pump, and thereby adversely affects fuel efficiency. Moreover, with regard to the clutch, while the clutch is being applied, a seal ring, which is provided at a location where oil is communicated between members rotating relative to each other, prevents leakage of oil from a clutch apply oil passage. While the clutch is being applied, the high clutch apply pressure is applied to the seal ring, so that the seal ring is pressed onto one of the rotating members while they are rotating. This causes a friction loss therebetween by the seal ring, and thereby adversely affects the fuel efficiency.

The present invention is made with attention to the problem described above. It is an object of the invention to provide a clutch device with which it is possible to reduce an energy loss caused by a clutch apply oil pressure while a clutch is being applied.

### Means to Solve the Problem(s)

According to the present invention, in order to accomplish the object described above, an automatic transmission clutch control apparatus includes a manual valve, a clutch, a clutch release valve, and a lock mechanism. The manual valve is configured to output a clutch apply pressure when a drive position is selected by operation of a selector. The clutch is configured to be brought into a clutch apply state by travel of a clutch piston by supply of the clutch apply pressure. The clutch release valve is configured to output a clutch release oil pressure by bypassing the manual valve. The lock mechanism is configured to: mechanically lock the clutch piston in a position under a condition that the clutch apply pressure is reduced, wherein the position of the clutch piston is when the clutch is bought into the clutch apply state by supply of the clutch apply pressure; and release the locking by the clutch release pressure outputted by the clutch release valve.

### Effect(s) of the Invention

According to the automatic transmission clutch control apparatus of the present invention, it is unnecessary to hold the clutch apply oil pressure while the clutch is being applied, and it is possible to prevent the high clutch oil pressure from being applied to the seal ring disposed between the members rotating relative to each other under the clutch apply pressure, and thereby reduce the energy loss caused by the clutch apply oil pressure while the clutch is being applied. According to this configuration, the lock of the lock mechanism can be released irrespective of the selected position of the manual valve. This makes it possible to cause the transmitted torque to become substantially equal to zero, and prevent interlocking.

### Brief Description of the Drawings

FIG. 1 is a sectional view of a part including a forward-reverse switching device of a belt-type continuously variable transmission provided with a clutch device controlled by an automatic transmission clutch control apparatus according to an embodiment of the present invention.
FIG. 2 is an enlarged sectional view of a lock mechanism employed by the clutch device of FIG. 1.
FIG. 3 (FIGS. 3A∼3E) is a schematic diagram showing a relationship in force when a forward clutch piston presses an auxiliary piston in the clutch device.
FIG. 4 (FIGS. 4A∼4E) is a schematic diagram showing a relationship in force when the auxiliary piston presses the forward clutch piston in the clutch device.
FIG. 5 is a view showing a half-clutch condition where the clutch device is slipping.
FIG. 6 is a view showing a condition where the clutch device is applied.
FIG. 7 is a hydraulic circuit diagram of the automatic transmission clutch control apparatus of the embodiment for performing a control to supply oil to the clutch device and a lock mechanism, etc., of the clutch device, and drain oil therefrom.

### Mode(s) for Carrying Out the Invention

The following describes an embodiment of the present invention in detail with reference to the drawings.

### Embodiment

First, the following describes whole configuration of a clutch device employed by an automatic transmission clutch control apparatus according to the embodiment. This clutch device is used to switch a forward-reverse switching device of a vehicular belt-type continuously variable transmission.

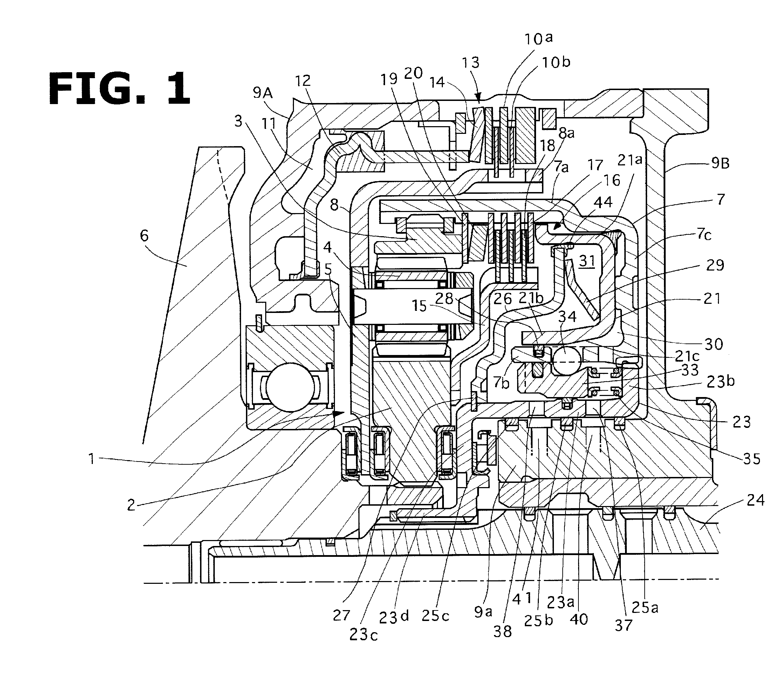

The following describes the forward-reverse switching device. FIG. 1 shows only an upper half part with respect to an input shaft 24. As shown in FIG. 1, forward-reverse switching device 1 is composed of a single-pinion type planetary gearset. The planetary gearset includes a sun gear 2, a ring gear 3, and a pinion carrier 5, wherein ring gear 3 is disposed at an outer periphery of sun gear 2, and pinion carrier 5 supports a plurality of pinions 4 rotatably, and pinions 4 are constantly in mesh with sun gear 2 and ring gear 3.

Sun gear 2 includes an inner peripheral end portion spline-engaged with a cylindrical portion of a stationary-side sheave 6 of a primary pulley, wherein the cylindrical portion projects in the axial direction, and serves as an output member of forward-reverse switching device 1. The side surface of sun gear 2 opposite to sheave 6 is coupled to an inner peripheral portion of a forward clutch hub 15, and serves as an input member for driving torque. Ring gear 3 is meshed with a spline formed in an inner peripheral surface of an outer cylindrical part 7a of a forward clutch drum 7, and serves as an input member of forward-reverse switching device 1. Pinion carrier 5 includes an outer peripheral portion coupled to a brake drum 8, and serves as a stationary member of forward-reverse switching device 1.

Specifically, a plurality of friction plates 10a, 10b are disposed between an outer peripheral surface side of an outer cylindrical part 8a of brake drum 8 coupled to pinion carrier 5 and an inner peripheral surface of a cylindrical case-side member 9A fixed to a transmission case, and engaged with corresponding ones thereof. Moreover, a reverse brake 13 is provided to perform application and release between brake drum 8 and case-side member 9A by forward and rearward travel of a brake piston 12 in response to supply of brake pressure oil to a brake oil chamber 11 and drainage of brake pressure oil from brake oil chamber 11. A return spring 14 is arranged between a tip end portion of brake piston 12 and friction plate 10. Accordingly, when reverse brake 13 is applied, pinion carrier 5 is fixed and held stationary with respect to the case side.

On the other hand, a forward clutch 16 is provided between forward clutch drum 7 coupled to ring gear 3 and forward clutch hub 15 coupled to sun gear 2. Specific configuration of forward clutch 16 is described later.

When a driving force is inputted from an engine not shown or the like through input shaft 24 and others to forward clutch drum 7 as described below under the condition that reverse brake 13 is released and forward clutch 16 is applied, the rotating elements of the planetary gearset of forward-reverse switching device 1 rotate as a solid unit. As a result, sun gear 2 drivingly rotates at direct drive (speed ratio equal to 1), so that sheave 6 coupled to sun gear 2 rotates at the same rotational speed and same torque as the driving input. Under this condition, the vehicle is driven forward at a speed ratio corresponding to the pulley ratio.

On the other hand, when the driving force is being inputted to forward clutch drum 7 under the condition that forward clutch 16 is released and reverse brake 13 is applied in contrast to the situation described above, sun gear 2 rotates in the reverse direction at a reduced speed. Under this condition, the vehicle is driven rearward at a speed ratio corresponding to the pulley ratio. When both of forward clutch 16 and reverse brake 13 are released, forward-reverse switching device 1 is in a neutral state where even if a driving force is inputted to forward clutch drum 7, no driving force is transmitted to sheave 6 of the pulley.

The following describes specific configuration of forward clutch 16. As described above, in forward clutch 16, a plurality of drive plates 17 that are fitted with the spline of the inner peripheral side of forward clutch drum 7 and movable in the axial direction, and a plurality of driven plates 18 that are fitted with the spline of the outer peripheral surface of forward clutch hub 15 and movable in the axial direction, are arranged and layered alternately in the axial direction, wherein friction surfaces thereof are configured to press each other.

A diaphragm spring 20 is disposed between one of drive plates 17 closest to forward-reverse switching device 1 (the leftmost one in FIG. 1) and a snap ring 19 fixed to forward clutch drum 7. Diaphragm spring 20 is configured to be completely compressed when the clutch is applied. Diaphragm spring 20 corresponds to an elastic member of the present invention. Snap ring 19 is configured to be in contact with the side end surface of ring gear 3 and thereby bear a load in the axial direction.

Forward clutch piston 21 is inserted in a tubular space between outer cylindrical part 7a and inner cylindrical part 7b of forward clutch drum 7, and is configured to travel in the axial direction. Outer cylindrical part 21a of forward clutch piston 21 is folded outwardly in the radial direction, and is configured to contact the rightmost one of drive plates 17 in FIG. 1. The tip end portion of inner cylindrical part 21b is supported by the outer peripheral surface of inner cylindrical part 7b of forward clutch drum 7. A seal member 28 is provided between inner cylindrical part 21b and inner cylindrical part 7b.

The right-side portion of inner cylindrical part 7b of forward clutch drum 7 in FIG. 1 is coupled to the outer peripheral end of an outer flange part 23b of a forward support drum 23, wherein outer flange part 23b projects outwardly in the radial direction from the right end portion of a cylindrical part 23a of forward support drum 23 in FIG. 1, and wherein forward support drum 23 is rotatably supported by a boss part 9a of the inside of case-side member 9B. Case-side member 9B corresponds to a stationary part of the present invention. At the left end side of forward support drum 23 in FIG. 1, a boss part 23d, which is formed at an inner peripheral end portion of an inner flange part 23c folded inwardly in the radial direction, is spline-fitted with input shaft 24. Cylindrical part 23a of forward support drum 23 is rotatably supported on the outer peripheral surface of the cylindrical boss part 9a of case-side member 9B. Three seal members 25a, 25b, 25c are provided between cylindrical part 23a and boss part 9a.

A separation plate 26 is attached to an outer peripheral surface of the left end portion of cylindrical part 23a of forward support drum 23 in FIG. 1. Leftward movement of separation plate 26 in the axial direction in FIG. 1 is restricted by contact between its inner peripheral end portion and a snap ring 27. A seal member 44 attached to an outer peripheral end portion of separation plate 26 is made to be in contact with the inner peripheral surface of outer cylindrical part 21a of forward clutch piston 21. An annular return spring 29 is provided between separation plate 26 and forward clutch piston 21. The elastic force of return spring 29 presses forward clutch piston 21 to a release position (position in FIG. 1), namely, onto a side wall 7c of forward clutch drum 7, and thereby prevents forward clutch piston 21 from bringing the drive plates 17 and driven plates 18 into press contact with each other.

A clutch apply pressure chamber 30 is defined between side wall 7c of forward clutch drum 7 and forward clutch piston 21, whereas a clutch release pressure chamber 31 is defined between separation plate 26 and forward clutch piston 21.

In the configuration described above, a lock mechanism 32 is provided between inner cylindrical part 21b of forward clutch piston 21 and cylindrical part 23a of forward support drum 23, wherein lock mechanism 32 includes a part thereof. Lock mechanism 32 is configured to mechanically hold forward clutch piston 21 in the engaged position, and thereby hold forward clutch 16 in the applied state, even if the clutch apply pressure is reduced or removed. Lock mechanism 32 includes inner cylindrical part 21b of forward clutch piston 21, cylindrical part 23a of forward support drum 23, an auxiliary piston 33, balls 34, a press spring 35, and seal members 22, 28, 39, and is configured as described below.

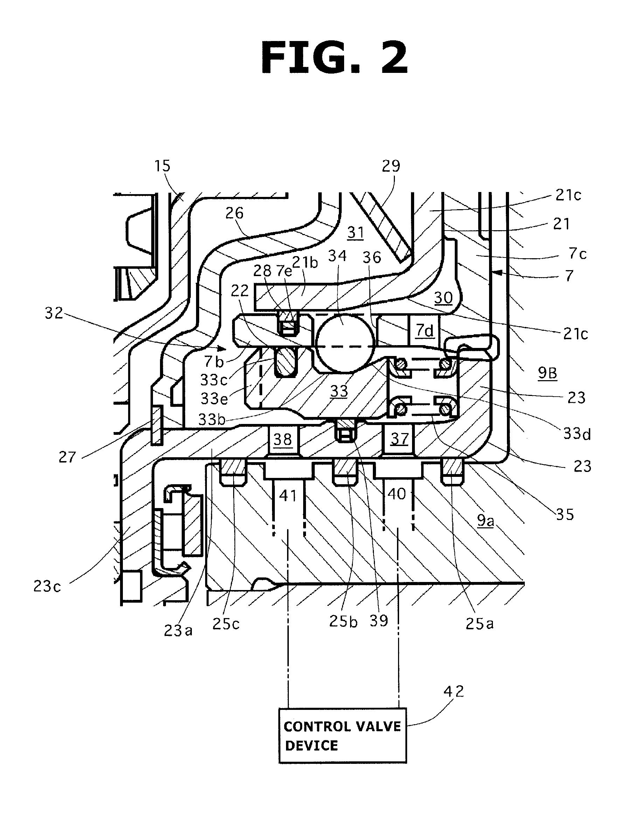

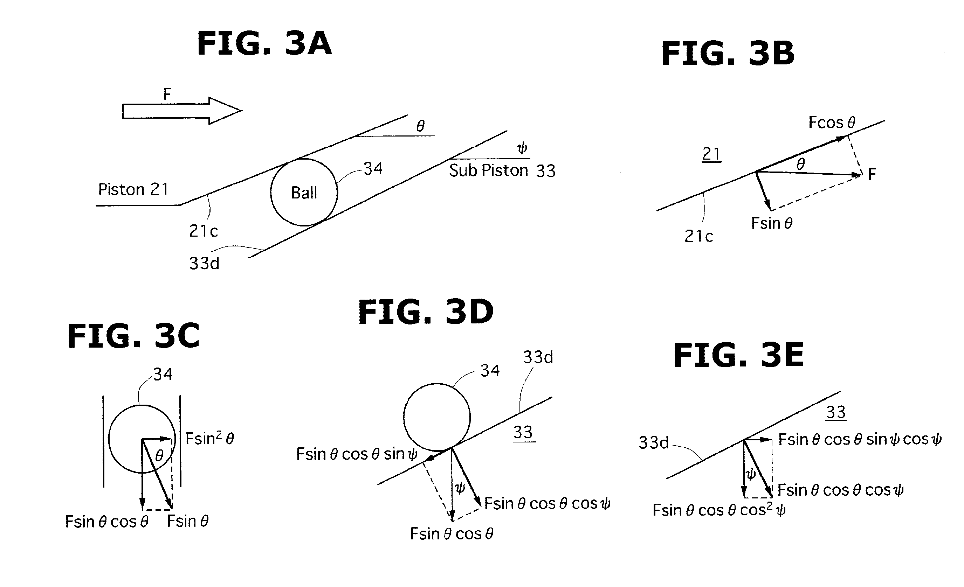

As shown in FIG. 1 and FIG. 2 that is an enlarged view of a portion including the lock mechanism 32 in FIG. 1, inner cylindrical part 21b of forward clutch piston 21 is formed with a first tapered surface 21c whose diameter increases gradually as followed toward side wall 7c of forward clutch drum 7. This first tapered surface 21c is inclined by an angle θ with respect to its central axis (see FIG. 3). In this embodiment, θ is set to 10°, for example. As described later, first tapered surface 21c extends from a clutch release position to a clutch apply position, and is constantly in contact with balls 34.

On the other hand, inner cylindrical part 7b of forward clutch drum 7 that supports inner cylindrical part 21b of forward clutch piston 21 is formed with a plurality of ball-retaining holes 36, and a clutch apply pressure through hole 7d, and an annular seal groove 7e, wherein ball-retaining holes 36 are arranged in the circumferential direction, and each ball-retaining hole 36 is capable of receiving insertion of ball 34, and clutch apply pressure through hole 7d is located at the right side in FIG. 2, to allow flow of the clutch apply pressure oil therein, and seal groove 7e is located at the tip side opposite thereto, to receive insertion of seal member 28. Ball-retaining hole 36 corresponds to a through hole of the present invention.

Ball 34 is constantly in ball-retaining hole 36, and travels in the radial direction within ball-retaining hole 36 depending on the positions of forward clutch piston 21 and auxiliary piston 33. However, irrespective of the position of auxiliary piston 33, ball 34 constantly projects inward and outward in the radial direction from bail-retaining hole 36, and thereby is in contact with first tapered surface 21c of forward clutch piston 21 and a second tapered surface 33d of auxiliary piston 33 described later. The number of ball-retaining holes 36 in which balls 34 are inserted may be determined based on a maximum transmissible torque through forward clutch 16.

Auxiliary piston 33 is an annular member, and is arranged movable in the axial direction of the clutch between inner cylindrical part 7b of forward clutch drum 7 and cylindrical part 23a of forward support drum 23. Auxiliary piston 33 is in contact with the radially inside portion of ball 34 at its outer peripheral side, and is formed with a ball travel slope part 33b on which ball 34 can be moved in the radial direction depending on the position of auxiliary piston 33. The ball travel slope part 33b is formed as a recess in a part of the outer periphery of auxiliary piston 33.

The bottom portion of ball travel slope part 33b includes a second tapered surface 33d whose depth gradually gets shallower as followed rightward in FIG. 2. Second tapered surface 33d is at an angle ϕ from the central axis of auxiliary piston 33, wherein angle ϕ is set greater than angle θ of first tapered surface 21c of inner cylindrical part 21b of forward clutch piston 21. In this embodiment, angle ϕ is set to 25°, for example.

Seal member 22 is inserted in an annular seal groove 33c in the left-side portion of the outer peripheral surface of auxiliary piston 33 with respect to ball travel slope part 33b in FIG. 2. Seal member 22 is in contact with the inner peripheral surface of inner cylindrical part 7b of forward clutch drum 7, and thereby prevents communication between clutch apply pressure chamber 30 and clutch release pressure chamber 31. Moreover, the left-side tip end portion of auxiliary piston 33 in FIG. 2 is formed with a plurality of communication grooves 33e for providing a communication passage and allowing supply of the clutch release pressure oil into clutch release pressure chamber 31, even under the condition that auxiliary piston 33 is in contact with separation plate 26.

Press spring 35 is arranged between the right end side surface of auxiliary piston 33 in FIG. 2 and outer flange part 23b of forward support drum 23, to bias auxiliary piston 33 leftward in FIG. 2. When biased leftward in FIG. 2 by press spring 35, second tapered surface 33d of ball travel slope part 33b of auxiliary piston 33 presses ball 34 onto the side surface of forward clutch drum 7 forming the ball-retaining hole 36 of inner cylindrical part 7b and first tapered surface 21c of inner cylindrical part 21b of forward clutch piston 21. However, the return force of return spring 29 is strong, so that forward clutch piston 21 does not travel, and thereby ball 34 does not move. As a result, auxiliary piston 33 is restricted by the position of forward clutch piston 21, so that movement of auxiliary piston 33 in the axial direction is restricted via ball 33 to prevent excessive movement leftward in FIG. 2.

A clutch apply pressure through hole 37 and a clutch release pressure through hole 38 are formed in cylindrical part 23a of forward support drum 23 arranged inside of the annular auxiliary piston 33, wherein clutch apply pressure through hole 37 is configured to supply and drain the clutch apply pressure oil to and from clutch apply pressure chamber 30 through the space where press spring 35 is arranged, and wherein clutch release pressure through hole 38 is configured to supply and drain the clutch release pressure oil to and from clutch release pressure chamber 31. Clutch apply pressure through hole 37 and clutch release pressure through hole 38 are configured to fail to communicate with each other by seal member 39 that is disposed between cylindrical part 23a of forward support drum 23 and auxiliary piston 33.

Boss part 9a of case-side member 9B is formed with a clutch apply pressure communication passage 40 and a clutch release pressure communication passage 41 which are configured to communicate with clutch apply pressure through hole 37 and clutch release pressure through hole 38 formed in cylindrical part 23a of forward support drum 23, respectively.

Clutch apply pressure communication passage 40 and clutch release pressure communication passage 41 are connected to a control valve device 42. Control valve device 42 is configured to set the clutch apply pressure and the clutch release pressure to optimal values, and determine timings of supply and drainage. Accordingly, control valve device 42 also functions to drain the clutch apply pressure oil from clutch apply pressure chamber 30 after lock mechanism 32 is locked by application of forward clutch 16.

The following describes a principle of lock mechanism 32. FIG. 3A schematically shows a situation where forward clutch piston 21 is biased by the elastic force (return force) from diaphragm spring 20 that is completely compressed when the clutch is applied, to press auxiliary piston 33 in the axial direction via ball 34. In the case where return spring 29 is provided, it is appropriate to add the load of return spring 29 to the elastic force of diaphragm spring 20.

FIG. 3B shows a relationship among components of force in the situation where first tapered surface 21c of forward clutch piston 21 presses ball 34. Since first tapered surface 21c has the angle θ, the component of return force F along first tapered surface 21c is equal to Fcosθ, whereas the component of return force F perpendicular to first tapered surface 21c is equal to Fsinθ.

FIG. 3C shows a relationship among components of force applied to ball 34. Since ball 34 is applied with the component of Fsinθ from first tapered surface 21c in the direction perpendicular to first tapered surface 21c, this component is distributed to components of force in the axial direction and radial direction of the clutch, wherein the component in the axial direction is equal to Fsin²θ, and the component in the radial direction is equal to Fsinθcosθ.

FIG. 3D shows a relationship among components of force to press second tapered surface 33d of auxiliary piston 33. Since the force applied from ball 34 to second tapered surface 33d inwardly in the radial direction is equal to Fsinθcosθ, the component along second tapered surface 33d is equal to Fsinθcosθsinϕ, and the component perpendicular to second tapered surface 33d is equal to Fsinθcosθcosϕ, by using the angle ϕ of second tapered surface 33d.

FIG. 3E shows a relationship among components of force applied to second tapered surface 33d of auxiliary piston 33 in the radial direction and axial direction of the clutch. Since the force acting from ball 34 to second tapered surface 33d of auxiliary piston 33 in the perpendicular direction is equal to Fsinθcosθcosϕ, the components of this force in the radial direction and axial direction are equal to Fsinθcosθcos²ϕ and Fsinθsinϕcosϕ, respectively.

In summary, the force pressing the auxiliary piston 33 via ball 34 by forward clutch piston 21 by the return force F of diaphragm spring 20 is equal to the component Fsinθsinϕcosϕ in the axial direction. Accordingly, in this embodiment where θ is set to 10° and ϕ is set to 25°, auxiliary piston 33 can be held by a force that is about 15% of return force F of diaphragm spring 20.

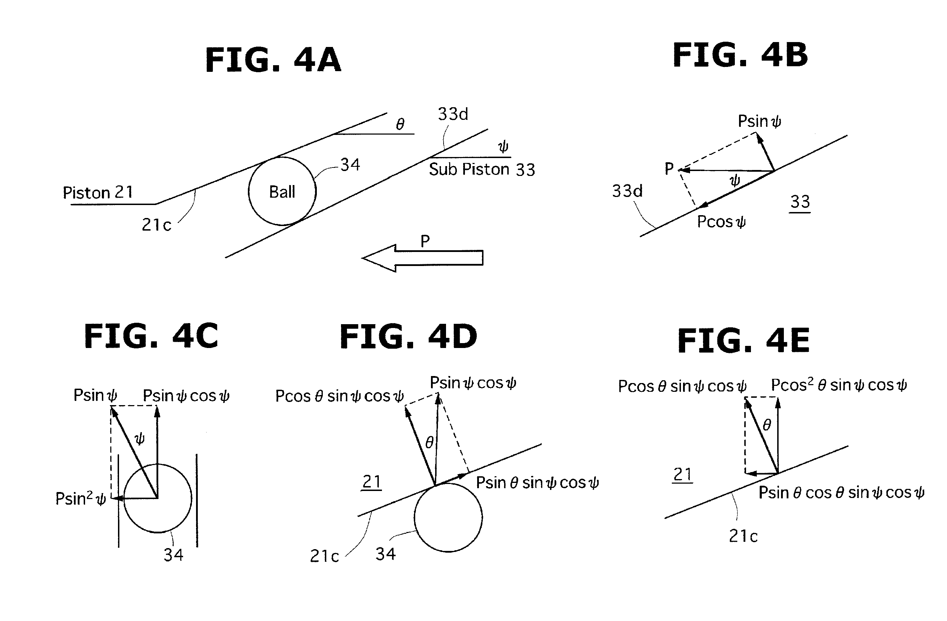

Next, FIG. 4A schematically shows a relationship of force in a situation where auxiliary piston 33 presses forward clutch piston 21 in the axial direction by biasing force P of press spring 35 in contrast to the situation described above.

FIG. 4B shows a relationship among components of force at second tapered surface 33d when second tapered surface 33d of auxiliary piston 33 presses ball 34 in the axial direction by biasing force P. The component of force along second tapered surface 33d and the component of force perpendicular to second tapered surface 33d are equal to Pcosϕ and Psinϕ, respectively.

FIG. 4C shows a relationship among components of force applied from second tapered surface 33d to ball 34. The components in the axial direction and radial direction of the clutch are equal to Psin²ϕ and Psinϕcosϕ, respectively.

FIG. 4D shows a relationship among components of the force Psinϕcosϕ perpendicularly pressing the first tapered surface 21c of forward clutch piston 21 by ball 34. The component along first tapered surface 21c and the component perpendicular to first tapered surface 21c are equal to Psinθsinϕcosϕ and Pcosθsinϕcosϕ, respectively.

FIG. 4E shows a relationship among components of the force acting from ball 34 perpendicularly to first tapered surface 21c of forward clutch piston 21. In this situation, the components in the radial direction and axial direction are equal to Pcos²θsinϕcosϕ and Psinθcosθsinϕcosϕ, respectively. Accordingly, the force pressing the forward clutch piston 21 by press spring 35 in the axial direction is equal to Psinθcosθsinϕcosϕ. Accordingly, in this embodiment where θ is set to 10° and ϕ is set to 25°, the force pressing the forward clutch piston 21 in the axial direction is equal to 6.55% of biasing force P. This pressing force is equal to about 1% of the biasing force of diaphragm spring 20, and equal to about 7% of the load of return spring 29.

The following describes operation of the clutch device described above. FIG. 1 shows a neutral condition where no torque is transmitted. Under this condition, the clutch apply pressure is not supplied to clutch apply pressure chamber 30, and the clutch release pressure is not supplied to clutch release pressure chamber 31. Accordingly, diaphragm spring 20 is in free state so that drive plates 17 and driven plates 18 are not pressed onto each other, and the transmissible torque therebetween is substantially equal to zero. Forward clutch piston 21 is reliably put back to and held at the clutch release position where forward clutch piston 21 is pressed onto the inner side wall 7c of forward clutch drum 7 by return spring 29.

In lock mechanism 32, forward clutch piston 21 is in the clutch release position, namely, in the rightmost position in FIG. 1 and FIG. 2, so that the left end portion of first tapered surface 21c in FIG. 1 is brought in contact with ball 34, and presses ball 34 in the rightward and downward direction in FIG. 1. As a result, ball 34 is located most inside in the radial direction, so that the inside portion of ball 34 in the radial direction projects from ball-retaining hole 36 of forward clutch drum 7 inwardly in the radial direction, and contacts second tapered surface 33d of ball-retaining part 33b of auxiliary piston 33.

Accordingly, although auxiliary piston 33 is biased to the clutch apply side (leftward in FIG. 1) by press spring 35, the force biasing the auxiliary piston 33 rightward in the axial direction via ball 34 in FIG. 1 (lock force) is stronger than the press force of press spring 35 in the opposite direction. As a result, auxiliary piston 33 is held in the position of FIG. 1.

When a select lever is put into a forward drive position under a condition that the engine is energized by a driver, the clutch apply pressure oil is supplied from control device 42 to clutch apply pressure chamber 30 via clutch apply pressure communication passage 40, clutch apply pressure through hole 37, and the space where press spring 35 is inserted, etc. When clutch apply pressure chamber 30 is filled with the clutch apply pressure oil, then the internal pressure of clutch apply pressure chamber 30 rises gradually so that forward clutch piston 21 starts to travel leftward in FIG. 1 against the return force of return spring 29, and then starts to compress diaphragm spring 20 while pressing drive plates 17 and driven plates 18.

Ball 34 of lock mechanism 32 is constantly applied with the pressing force leftward in FIG. 1 by press spring 35 via second tapered surface 33d of auxiliary piston 33. Since auxiliary piston 33 is further pressed leftward in FIG. 1 by the clutch apply pressure acting on the back surface (right end surface in FIG. 1) of auxiliary piston 33, ball 34 is pushed outwardly in the radial direction by a stronger force than when the clutch is being released.

On the other hand, along with the forward travel of forward clutch piston 21, first tapered surface 21c of forward clutch piston 21, which suppresses outward movement of ball 34 in the radial direction, also travels forward so that the contact point between first tapered surface 21c and ball 34 moves outwardly in the radial direction. In this way, ball 34 starts to move outwardly in the radial direction.

This outward movement of ball 34 in the radial direction causes auxiliary piston 33, whose second tapered surface 33d has been pressed by press spring 35 to be constantly in contact with ball 34, to start to move leftward in FIG. 1.

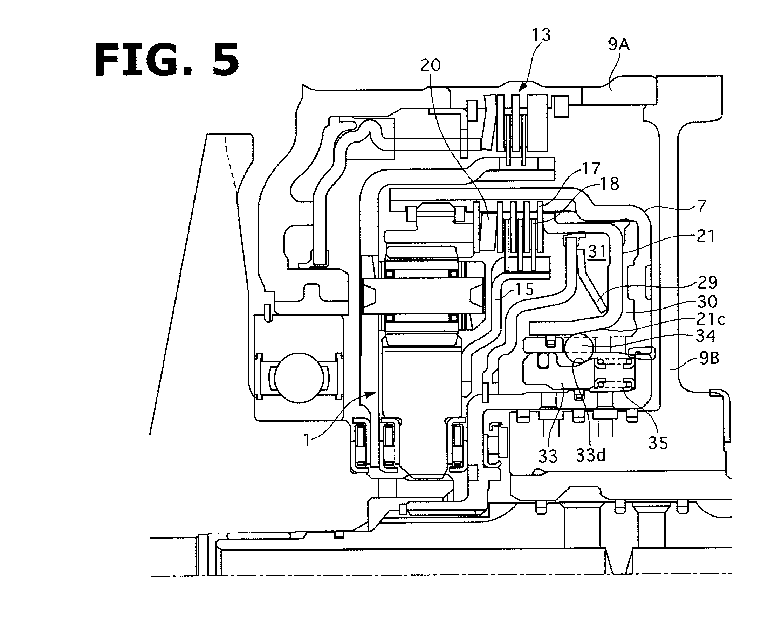

In this way, as the clutch pressure rises, diaphragm spring 20 gets compressed to cause an elastic force to press drive plates 17 and driven plates 18. This causes a frictional torque therebetween, and thereby establishes a half-clutch condition shown in FIG. 5 where part of the input torque is transmitted while drive plates 17 and driven plates 18 are slipping relative to each other and thereby forward clutch drum 7 and forward clutch hub 15 are slipping relative to each other.

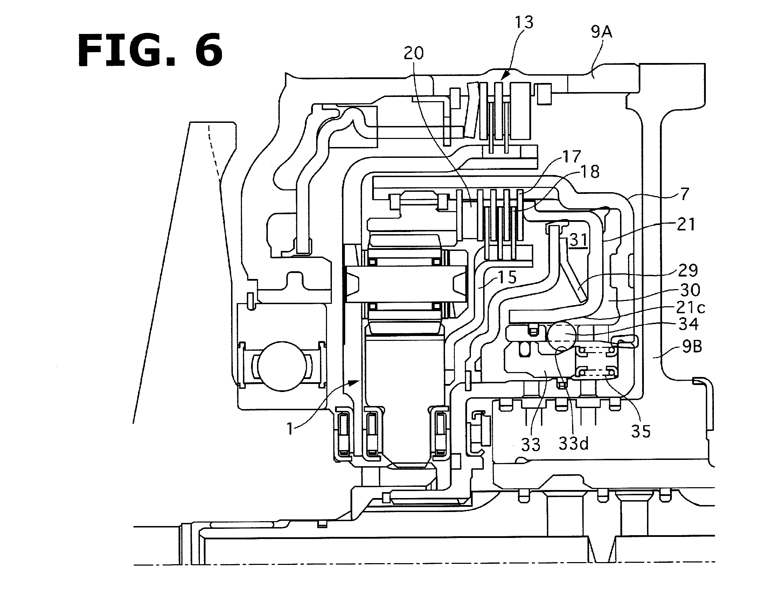

As the clutch apply pressure further rises, diaphragm spring 20 is completely compressed to reach a condition shown in FIG. 6 where diaphragm spring 20 is maximally deformed elastically. This condition is a clutch completely applied condition where the slippage described above does not occur but the input torque is fully transmissible. Under this condition, forward clutch piston 21 cannot travel forward any more. Accordingly, the positions of auxiliary piston 33 and ball 34 in this state are most forward positions, and lock positions.

Thereafter, after a predetermined period of time, the clutch apply pressure oil is drained from clutch apply pressure chamber 30 by control device 42. At this moment, the oil pressure pressing the forward clutch piston 21 in the clutch apply direction disappears, but lock mechanism 32 is maintained in the lock state mechanically locked in the lock position described above, so that forward clutch piston 21 is also maintained at the position. Accordingly, forward clutch 16 is maintained in the applied state, and forward clutch drum 7 and forward clutch hub 15 rotate as a solid unit, while fully transmitting the inputted torque.

Under the completely applied condition, diaphragm spring 20 is completely compressed, to cause an elastic force, wherein the elastic force is required to be sufficient to transit the entire inputted torque between drive plates 17 and driven plates 18. Moreover, under the completely applied condition, the lock position of lock mechanism 32 is mechanically determined by the completely compressed state of diaphragm spring 20, so that the lock position is constantly maintained optimal irrespective of variation of diaphragm spring 20 and wear of drive plates 17 and driven plates 18 due to getting old.

In order to release forward clutch 16 from the applied state, the clutch release pressure oil is supplied from control device 42 to clutch release pressure chamber 31 via clutch release pressure communication passage 41, clutch release pressure through hole 38, etc. When clutch release pressure chamber 31 is filled with the clutch release pressure oil and the release pressure rises gradually, the pressure directly pressing the forward clutch piston 21 rightward in FIG. 1 increases gradually, and the left end portion of auxiliary piston 33 in FIG. 1 is pressed rightward in FIG. 1 by the release pressure.

As a result, auxiliary piston 33 is pressed by the release pressure to travel rightward in FIG. 1, and forward clutch piston 21 also travels rightward in FIG. 1 by the release pressure and the elastic forces of diaphragm spring 20 and return spring 29. Accordingly, ball 34 is pressed inwardly in the radial direction by first tapered surface 21c along with backward movement of forward clutch piston 21, while contacting the second tapered surface 33d of auxiliary piston 33 moving backward. Then, the locking of lock mechanism 32 is released.

When diaphragm spring 20 is returned from the compressed (elastically deformed) state, the pressing force to drive plates 17 and driven plates 18 disappears, so that forward clutch hub 15 becomes free from forward clutch drum 7. Forward clutch piston 21 is pressed onto side wall 7c of forward clutch drum 7, and is maintained at this position by return spring 29. After a time period has elapsed to ensure that release of forward clutch 16 is completed, control device 42 drains the clutch release pressure oil from clutch release pressure chamber 31, to reach the condition shown in FIG. 1.

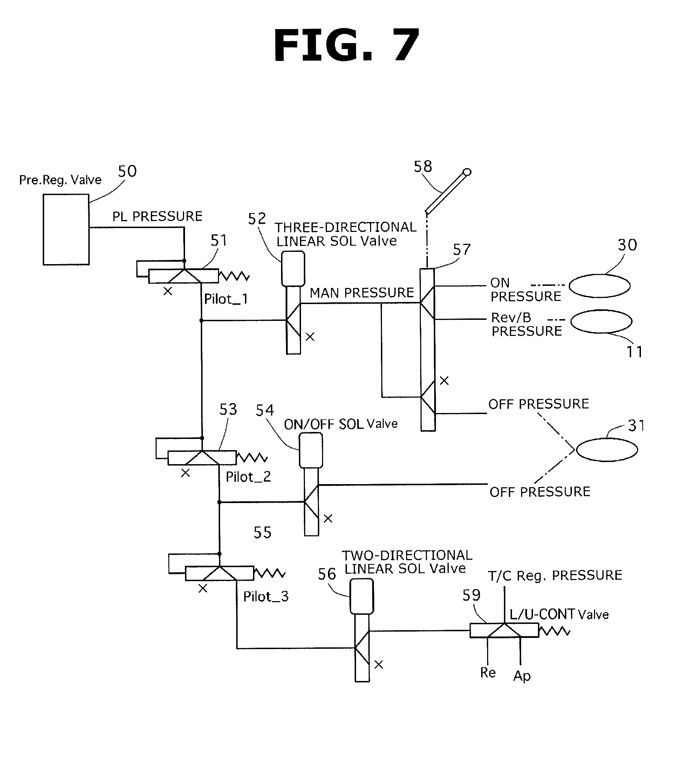

The following describes a clutch control apparatus for controlling the clutch device described above. The clutch control apparatus includes control device 42. Control device 42 includes a microcomputer, a control valve, etc., and includes a hydraulic circuit as partly shown in FIG. 7. A pressure regulator valve 50 regulates oil supplied from a pump not shown down to a predetermined pressure, and then outputs a line pressure to a first pilot valve 51. First pilot valve 51 produces a first pilot pressure by lowering the line pressure supplied from pressure regulator valve 50, and supplies the first pilot pressure to a three-directional linear solenoid valve 52 and a second pilot valve 53.

Second pilot valve 53 produces a second pilot pressure by lowering the first pilot pressure supplied from first pilot valve 51, and supplies the second pilot pressure to an on-off switching solenoid valve 54 and a third pilot valve 55.

Third pilot valve 54 produces a third pilot pressure by lowering the second pilot pressure supplied from second pilot valve 53, and supplies the third pilot pressure to a two-directional linear solenoid valve 56. Since pressure is lowered sequentially by each pilot valve, the obtained pressures are in order of line pressure > first pilot pressure > second pilot pressure > third pilot pressure.

Three-directional linear solenoid valve 52 is capable of lowering the first pilot pressure supplied from first pilot valve 51 depending on an operating state of the vehicle, and adjusts the pressure to an optimal apply/release pressure for application of forward clutch 16 and reverse brake 13 depending on the operating state, and then supplies the adjusted pressure to a manual valve 57. Three-directional linear solenoid valve 52 is controlled by the microcomputer.

Manual valve 57 switches the flow of oil depending on the position of a valve spool that is changed by operation of select lever 58 by a driver. Manual valve 57 can be switched by the driver to a P position for parking of the vehicle, an R position for rearward drive, an N position for producing a neutral state where no torque is transmitted, a D position for forward drive, and an L position capable of generating engine braking in forward drive. Specific configuration of manual valve 57 is described later.

On-off switching solenoid valve 54 supplies the clutch release oil pressure ("OFF PRESSURE" in FIG. 7) to clutch release pressure chamber 31 of forward clutch 16 and auxiliary piston 33 of lock mechanism 32, and conversely drains the clutch release oil pressure therefrom. On-off switching solenoid valve 54 corresponds to a clutch release valve of the present invention.

Two-directional linear solenoid valve 56 regulates the third pilot pressure supplied from third pilot valve 54 variably depending on the operating state, and outputs the regulated third pilot pressure to a lockup control valve 59.

Lockup control valve 59 performs lockup and release of the lockup by distributing the third pilot pressure regulated by two-directional linear solenoid valve 56 to an apply chamber and a release chamber of a lockup mechanism of a torque converter not shown. The magnitude of the regulated third pilot pressure may be set to achieve a slip lockup condition.

The following describes manual valve 57. The relationship between ports and spool is set so that when select lever 58 is put in a selected position releasing the forward clutch 16, namely, in the P or R or N position, the apply/release pressure regulated by three-directional linear solenoid valve 52 can be supplied as the clutch release pressure to forward clutch 16 and lock mechanism 32. It is in this point that manual valve 57 is different from normal manual valves.

When in the P or N position, supply of the clutch apply pressure to forward clutch 16 and reverse brake 13 is prevented, and the oil is drained from clutch apply pressure chamber 30 and brake oil chamber 11 via manual valve 57. Accordingly, forward clutch 16 and reverse brake 13 are in their neutral states where no torque is transmissible. On-off switching solenoid valve 54 also prevents supply of the second pilot pressure to clutch release pressure chamber 31 of forward clutch 16 and auxiliary piston 33 of lock mechanism 32. In contrast, the clutch release pressure is supplied to clutch release pressure chamber 31 and auxiliary piston 33 from manual valve 57, so that forward clutch 16 is released naturally, and lock mechanism 32 is forced to be released from the lock state. Under this condition, three-directional linear solenoid valve 52 is controlled to produce a pressure sufficient for the release of locking.

Next, when select lever 58 is operated to the R position, manual valve 57 is switched to supply the brake apply pressure to brake oil chamber 11 of reverse brake 13, and thereby applies reverse brake 13, and thereby fix pinion carrier 8 to case-side member 9A. In this situation, three-directional linear solenoid valve 52 regulates the brake apply pressure to be sufficient to prevent slippage of reverse brake 13. The clutch release pressure is supplied to clutch release pressure chamber 31 and auxiliary piston 33 from manual valve 57 as in the P or N position, to force lock mechanism 32 to be released from the lock state, and release forward clutch 16. The oil in clutch apply pressure chamber 30 of forward clutch 16 is drained via manual valve 57. On-off switching solenoid valve 54 is configured so that the release pressure is drained from clutch release pressure chamber 31, when the release of forward clutch 16 or the lock release of lock mechanism 32 is detected, or when a predetermined period (period during which the release of forward clutch 16 or the lock release of lock mechanism 32 can be completed) has elapsed from start of supply of the release pressure.

Next, when select lever 58 is operated to the D position for forward drive, the clutch apply pressure flows from manual valve 57 to clutch apply pressure chamber 30 of forward clutch 16, and thereby causes forward clutch piston 21 to travel. In response to this travel, auxiliary piston 33 of lock mechanism 32 travels. When forward clutch 16 is completely applied and brake piston 12 stops after maximum travel, auxiliary piston 33 is locked in a lock position corresponding to this condition.

When a time period has elapsed to ensure the completion of the locking, three-directional linear solenoid valve 52 drains the clutch apply pressure from clutch apply pressure chamber 30. This eliminates the necessity of supply of the clutch apply pressure even while forward clutch 16 is being applied. When the D position is selected, manual valve 57 prevents the output of the clutch release pressure and thereby fails to supply the clutch release pressure to clutch release pressure chamber 31. Under this condition, the oil in brake oil chamber 11 of reverse brake 13 is drained via manual valve 57, so that reverse brake 13 is free in the released state.

The following describes effects produced by the automatic transmission clutch control apparatus according to the embodiment described above. The automatic transmission clutch control apparatus according to the embodiment includes lock mechanism 32 that locks forward clutch 16 in the clutch apply position in relation to forward clutch piston 21, and drain the clutch apply pressure oil from clutch apply pressure chamber 30 of forward clutch 16 while the clutch is being applied after the lock. This configuration eliminates the necessity of holding of the clutch oil pressure, and enhances the fuel efficiency by reduction of energy loss, because the high clutch oil pressure as a factor of friction loss is not applied to seal members 25a, 25b, 25c, etc., which are arranged between the members rotating relative to each other under the clutch apply pressure. This effect is significant because the clutch device is forward clutch 16 that is maintained in the applied state for a long time period of driving.

The feature that lock release valve 54 is provided which can output the clutch release pressure by bypassing the manual valve 57, serves to force lock mechanism 32 to be released from the lock state independently of the position of manual valve 57. For example, when one of the forward position and the reverse position is quickly shifted to the other so that reverse brake 13 and forward clutch 16 are simultaneously applied to establish an interlock condition, on-off switching solenoid valve 54 supplies the clutch release pressure (second pilot pressure) to clutch release pressure chamber 31 of forward clutch 16 and auxiliary piston 33 of lock mechanism 32, to force forward clutch 16 to be released. When a selecting operation is performed to shift a drive position to a non-drive position, on-off switching solenoid valve 54 supplies the clutch release pressure (second pilot pressure) to clutch release pressure chamber 31 of forward clutch 16 and auxiliary piston 33 of lock mechanism 32, to force forward clutch 16 to be released, and thereby prevent that driving is continued in the non-drive position in conflict with the selecting operation, and thereby prevent the driver from feeling uncomfortable and insecure.

Although the present invention has been described with reference to the embodiment, the present invention is not limited to the embodiment, but contains design changes within the scope of the concept of the invention.

For example, the selector according to the present invention is not limited to the select lever according to the embodiment, but may be a type that select buttons are pressed selectively. Lock mechanism 32 may be different from the embodiment. For example, the configuration described in Japanese Patent Application No. 2012-123864 filed by the present applicant.

The clutch device according to the present invention is not limited to continuously variable transmissions, but may be another device, or may be applied to a clutch device other than the forward clutch.

### Description of Symbols

1 Forward-Reverse Switching Device
7 Forward Clutch Drum (First Member; Second Member)
9b Case-Side Member (Stationary Part)
15 Forward Clutch Hub (Second Member; First Member)
16 Forward Clutch
17 Drive Plate (First Friction Plate; Second Friction Plate)
18 Driven Plate (Second Friction Plate; First Friction Plate)
20 Diaphragm Spring (Elastic Member)
21 Forward Clutch Piston (Clutch Piston)
26 Separation Plate
30 Clutch Apply Pressure Chamber (Clutch Apply Pressure Part)
31 Clutch Release Pressure Chamber
32 Lock Mechanism
33 Auxiliary Piston
34 Ball
35 Press Spring
36 Ball-Retaining Hole (Through Hole)
42 Control Device
54 On-Off Switching Solenoid Valve (Clutch Release Valve)
57 Manual Valve

## Claims

1. An automatic transmission clutch control apparatus comprising:
a manual valve configured to output a clutch apply pressure when a drive position is selected by operation of a selector;
a clutch configured to be brought into a clutch apply state by travel of a clutch piston by supply of the clutch apply pressure;
a clutch release valve configured to output a clutch release oil pressure by bypassing the manual valve; and
a lock mechanism configured to:
mechanically lock the clutch piston in a position under a condition that the clutch apply pressure is reduced, wherein the position of the clutch piston is when the clutch is bought into the clutch apply state by supply of the clutch apply pressure; and
release the locking by the clutch release pressure outputted by the clutch release valve.

2. The automatic transmission clutch control apparatus as claimed in Claim 1, wherein the manual valve is configured to force the lock mechanism to be released by supply of the clutch apply pressure to the lock mechanism when in a select position releasing the clutch.

## Amended claims

### Amended claims under Art. 19.1 PCT

**1.** An automatic transmission clutch control apparatus comprising:
a manual valve configured to output a clutch apply pressure when a drive position is selected by operation of a selector;
a clutch configured to be brought into a clutch apply state by travel of a clutch piston by supply of the clutch apply pressure;
a clutch release valve configured to output a clutch release oil pressure by bypassing the manual valve; and
a lock mechanism configured to:
mechanically lock the clutch piston in a position under a condition that the clutch apply pressure is reduced, wherein the position of the clutch piston is when the clutch is bought into the clutch apply state by supply of the clutch apply pressure; and
release the locking by the clutch release pressure outputted by the clutch release valve.

**2.** The automatic transmission clutch control apparatus as claimed in Claim 1, wherein the manual valve is configured to force the lock mechanism to be released by supply of the clutch release pressure to the lock mechanism when in a select position releasing the clutch.

Statement under Art. 19.1 PCT
Please find enclosed an amendment to the claims, which were filed during the international stage.
- Claim 2 is amended to correct "clutch apply pressure" to "clutch release pressure" based on paragraphs 0056, 0057.
